# EUROPÄISCHE PATENTSCHRIFT

(11) **EP 1 495 975 B1**
(45) Veröffentlichungstag und Bekanntmachung des Hinweises auf die Patenterteilung: **27.09.2006**
(21) Anmeldenummer: 04015019.5
(22) Anmeldetag: 25.06.2004
(51) Int. Cl.: B65B 51/30

(54) **Vorrichtung zum Verschweissen eines Folienschlauches**
Apparatus for sealing bag-type packages
Dispositif pour souder des emballages flexibles

(30) Priorität: 11.07.2003 DE 10331361
(43) Veröffentlichungstag der Anmeldung: 12.01.2005
(73) Patentinhaber: ROVEMA VERPACKUNGSMASCHINEN GMBH, 35463 Fernwald (DE)
(72) Erfinder: Kammler, Roman, Dr., 67547 Worms (DE); Baur, Walter, Dr., 63584 Gründau (DE)

(56) Entgegenhaltungen:
- DE-A- 19 627 892
- US-A- 4 965 986

## Beschreibung

Gegenstand der Patentanmeldung ist eine Vorrichtung zum Verschweißen eines Folienschlauches zu Verpackungszwecken.

Es sind vertikale Schlauchbeutelmaschinen bekannt, mit denen kopf- und bodenseitig verschweißte, befüllte Schlauchbeutel hergestellt werden. Dazu wird ein Folienschlauch zunächst längs verschweißt. Dann erfolgt eine Befüllung des Folienschlauches, seine Verschweißung quer zu seiner Transportrichtung und ein Abtrennen eines fertiggestellten Schlauchbeutels vom Folienschlauch.

Es sind unterschiedlichste Antriebe und Getriebe zum Betreiben der Schweißbacken bekannt, welche die Querverschweißung des Folienschlauches ausführen, um die Kopfund Bodennähte der Schlauchbeutel zu erzeugen.

Aus der DE 196 27 892 A1 ist eine Vorrichtung gemäß dem Oberbegriff des Anspruchs 1 bekannt, die für diese Querverscheißung geeignet ist.

Bei dieser bekannten Vorrichtung wird der Folienschlauch mittels zweier gegeneinander bewegbaren, den Folienschlauch zwischen sich einklemmenden Schweißbacken verschweißt, jeweils ein Backenhalter dient dabei zum Halten einer Schweißbacke und jeweils ein Backenträger zum Tragen eines Backenhalters und damit einer Schweißbacke. Als Antrieb ist ein Linearantrieb mit einem entlang einer Wirklinie linear beweglichen Teil vorgesehen. Mit dem beweglichen Teil ist ein Getriebe verbunden, wobei das Getriebe auch mit den Backenträgern verbunden ist, um eine gegenläufige Bewegung der Backenträger und damit der Schweißbacken zu erzeugen, um die Schweißbacken aufeinander zu und voneinander weg bewegen zu können. Dabei ist jeweils ein Gelenk an den Backenträgern vorgesehen, um Stangen des Getriebes schwenkbar mit den Backenträgern zu verbinden.

Die bekannte Vorrichtung hat den Nachteil, dass sie eine Stange aufweist, welche als Hebel zum Vergrößern des Schweißdruckes dient. Diese Stange reicht nach unten zum Linearantrieb und führt zusammen mit diesem zu einer relativ hohen Bauweise für diese Vorrichtung, was in der Praxis zu einem Platzproblem an einer vertikalen Schlauchbeutelmaschine führen kann.

Der Erfindung liegt die Aufgabe zu Grunde eine Vorrichtung des Oberbegriffs des Anspruchs 1 so weiterzubilden, dass eine relativ niedrige Bauweise erreichbar ist.

Gelöst ist die Aufgabe gemäß dem kennzeichnenden Teil des Anspruchs 1. Danach weist das Getriebe vier Stangen auf, wovon zwei innere Stangen über ein ortsfestes Gelenk schwenkbar befestigt sind, und zwei äußere Stangen über jeweils ein Gelenk an einer inneren Stange und ein weiteres Gelenk mit einem Backenträger verbunden sind. Das bewegliche Teil ist über ein Verbindungsglied mit den inneren Stangen verbunden, um bei einer Bewegung des beweglichen Teils entlang einer Wirklinie die inneren Stangen und damit die Backenträger voneinander weg oder aufeinander zu schwenken.

Die erfindungsgemäße Vorrichtung hat den Vorteil, dass sie relativ niedrig gebaut werden kann. Das bewegliche Teil kann in der Ebene des relativ ebenen Getriebes oder um eine geringe Distanz parallel dazu versetzt wirken. Es sind folglich Ausgestaltungen möglich, die nur ca. 200 mm Bauhöhe aufweisen. Darüber hinaus sind auch höhere Bauweisen denkbar, welche bei zur Verfügung stehendem relativ hohem Raum genutzt werden könnten.

Weitere, vorteilhafte Ausgestaltungen der erfindungsgemäßen Vorrichtung sind in den Ansprüchen 2 bis 8 beschrieben.

Eine kostengünstige Vereinfachung des Getriebes ist erreicht, wenn analog Anspruch 2 das ortsfeste Gelenk auf einer Verlängerung der Wirklinie liegt, und das Getriebe achsensymmetrisch zur Wirklinie aufgebaut ist. Wenn das Getriebe einen symmetrischen Aufbau mit der Wirklinie als Symmetrieachse aufweist, so werden nur Stangen eines Typs benötigt. Darüber hinaus treffen die Schweißbacken mittig am Folienschlauchdurchmesser auf, wenn sie zuvor jeweils einen gleichen Abstand zu dieser Mittellinie hatten, was zu geringen tangentialen Zugkräften am Folienschlauch führt und damit zu einem guten Schweißergebnis.

Enthält das Verbindungslied zwei weitere Stangen, welche einerseits über eine Gelenkstelle am beweglichen Teil mit dem beweglichen Teil verbunden sind, und andererseits über jeweils eine weitere Gelenkstelle mit einer inneren Stange verbunden sind (Anspruch 3), so ist ein Getriebe erreicht, dass durch entsprechende Auswahl der Stangenlängen eine gewünschte Schweißbackenbewegung bei einem linear bewegtem beweglichen Teil ermöglicht. In diesem Getriebe ist eine Hebelfunktion realisiert. Die Schweißkraft wird erhöht, wenn gemäß Anspruch 4 die weiteren Gelenkstellen weiter vom ortsfesten Gelenk entfernt sind als die Gelenke an den inneren Stangen.

Eine weitere, sehr zuverlässige Ausgestaltung des Getriebes ist erreicht, wenn analog Anspruch 5 das Verbindungsglied eine Halterung aufweist, welche vorzugsweise mittels einer Montageplatte mit dem beweglichen Teil verbunden ist, an der Halterung zwei um jeweils ein Gelenk schwenkbare Führungen vorgesehen sind, die vorzugsweise als Gleitführungen ausgestaltet sind, und jede Führung eine innere Stange fasst und an der Stange entlangbewegbar ist. Dieses Getriebe hat zudem den Vorteil, dass es auch quer zur Bewegungsrichtung eine relativ geringe Bauweite hat. Es ist also sehr kompakt.

Beliebige Bahnkurven werden erreicht, wenn eine Steuereinrichtung vorgesehen ist, um die Bewegung des beweglichen Teils zeitabhängig zu steuern (Anspruch 6). Als Bahnkurve ist hierbei in einem Ort-Zeit-Diagramm die Bewegung einer Schweißbacke zu verstehen. Derart können z. B. der Schweißvorgang verlängert und die Backenöffnungsweite reduziert werden, um eine sichere und relativ schnelle Beutelherstellung zu erreichen. Derart wird ein Stangenwechsel nicht mehr oder nur noch selten notwendig.

Ist gemäß Anspruch 7 der Linearantrieb als Linearmotor, welcher nach einem Schwebebahnprinzip funktioniert, ausgestaltet, so sind sehr schnelle und ortsgenau ansteuerbare Backenbewegungen erreichbar. Dieser elektromagnetische Linearantrieb hat zudem den Vorteil, dass ein relativ hoher Siegeldruck von ca. 5 bis 8 kN erreicht wird. Eine genaue Druckeinstellung ist dabei durch eine Begrenzung der Leistungsaufnahme des Linearmotors möglich.

Sind die Backenträger über jeweils zwei in Führungen geführten starren Verbindungen mit den Backenhaltern verbunden (Anspruch 8), so ist eine sehr stabile, verwindungssichere Ausgestaltung der relativ planen Vorrichtung erreicht.

Im folgenden wird die Erfindung an Hand zwei Ausführungsbeispiele darstellender Figuren näher beschrieben. Es zeigt:
- Figur 1: in einer Ansicht von oben eine Vorrichtung zum Verschweißen eines Folienschlauches, bei der ein Linearmotor mit einem sechs Stangen aufweisenden Getriebe dazu genutzt wird, Schweißbacken gegen den Folienschlauch zu bewegen, um diesen quer zu seiner Transportrichtung zu verschweißen, sowie
- Figur 2: in einer Ansicht von oben eine andere Ausgestaltung einer Vorrichtung zum Verschweißen eines Folienschlauches, wobei das Getriebe nur vier Stangen aufweist.

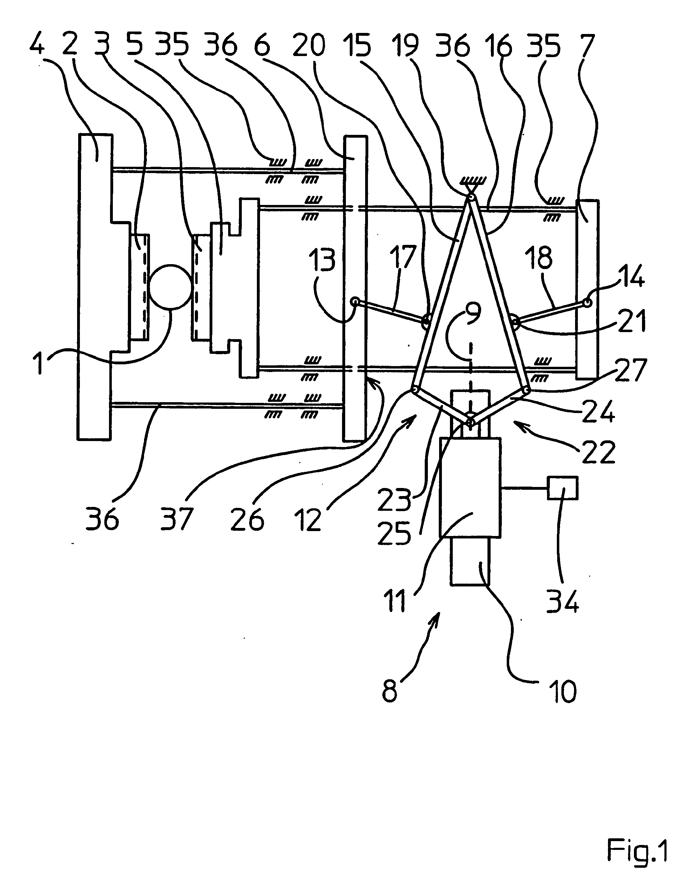

Bei einer Vorrichtung zum Verschweißen eines Folienschlauches 1 erfolgt diese Verschweißung, mittels zweier gegeneinander bewegbarer, den Folienschlauch 1 zwischen sich einklemmender Schweißbacken 2, 3 (Figur 1). Zwei Backenhalter 4, 5 dienen zum Halten jeweils einer Schweißbacke 2, 3 und jeweils ein Backenträger 6, 7 dient zum Tragen eines Backenhalters 4, 5 und damit der Schweißbacken 2,3. Die Backenträger 6, 7 sind über jeweils zwei in Führungen 35 geführten starren Verbindungen 36 mit den Backenhaltern 5, 6 verbunden. Dabei stecken zwei Verbindungen 36 in gleitender Weise in zwei Aussparungen 37 des Backenträgers 6. Als Antrieb für die Backenbewegung dient ein Linearantrieb 8 mit einem entlang einer Wirklinie 9 und eines ortsfesten Teils 10 linear beweglichen Teil 11. Das bewegliche Teil 11 ist mit dem Getriebe 12 verbunden. Ebenso ist das Getriebe 12 mit den Backenträgern 6, 7 verbunden, um eine gegenläufige Bewegung der Backenträger 6, 7 und damit der Schweißbacken 2, 3 zu erzeugen, und um die Schweißbacken 2, 3 aufeinander zu und voneinander weg bewegen zu können. Es ist jeweils ein Gelenk 13, 14 an den Backenträgern 6, 7, um Stangen 17, 18 des Getriebes 12 schwenkbar mit den Backenträgern 6, 7 zu verbinden.

Das Getriebe 12 weist vier Stangen 15, 16, 17, 18 auf, wovon zwei innere Stangen 15, 16 über ein ortsfestes Gelenk 19 schwenkbar befestigt sind, und zwei äußere Stangen 17, 18 über jeweils ein Gelenk 20, 21 an einer inneren Stange 15, 16 und ein weiteres Gelenk 13, 14 mit einem Backenträger 6, 7 verbunden sind. Das bewegliche Teil 11 ist über ein Verbindungsglied 22 mit den inneren Stangen 15, 16 verbunden, um bei einer Bewegung des beweglichen Teils 11 entlang einer Wirklinie 9 die inneren Stangen 15, 16 und damit die Backenträger 6, 7 voneinander weg oder aufeinander zu schwenken. Das Verbindungsglied 22 enthält zwei weitere Stangen 23, 24, welche einerseits über eine Gelenkstelle 25 mit dem beweglichen Teil 11 verbunden sind, und andererseits über jeweils eine weitere Gelenkstelle 26, 27 mit einer inneren Stange 15,16. Das ortsfeste Gelenk 19 liegt auf einer Verlängerung der Wirklinie 9. Das Getriebe 12 ist achsensymmetrisch zur Wirklinie 9 aufgebaut. Um einen Hebel zum Erreichen eines vergrößerten Schweißdruckes zur erreichen, sind die Gelenkstellen 26, 27 weiter vom ortsfesten Gelenk 19 entfernt als die Gelenke 20, 21.

Eine Steuereinrichtung 34 ist dazu vorgesehen, um die Bewegung des beweglichen Teils 11 zeitabhängig zu steuern, und um derart eine relativ lange Schweißdauer und ein schnelles Backenöffnen sowie Backenschließen zu erreichen.

Um eine sehr schnelle Backenbewegung zu realisieren, ist der Linearantrieb 8 als Linearmotor, welcher nach einem Schwebebahnprinzip funktioniert, ausgestaltet.

Die in Figur 1 dargestellte Vorrichtung erstreckt sich vornehmlich in horizontaler Richtung und weist somit in vertikaler Richtung eine sehr geringe Bauhöhe auf, wodurch eine entsprechende vertikale Schlauchbeutelmaschine, die diese Vorrichtung enthält, diesen Vorteil erfährt.

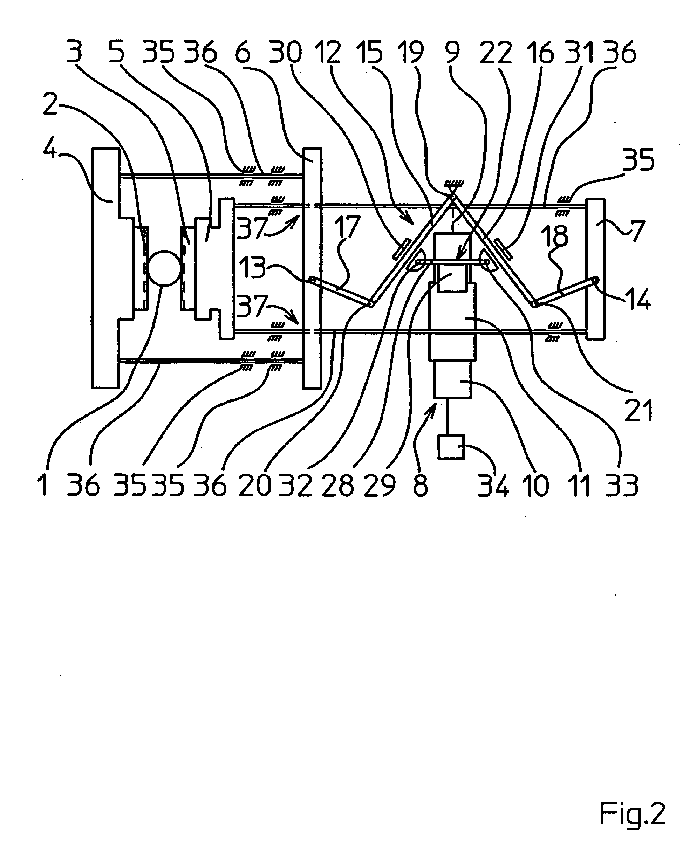

Für die in Figur 2 dargestellte Ausführungsform gelten die gleichen Vorteile. Im Unterschied zur Vorrichtung der Figur 1 weist hier jedoch das Verbindungsglied 22 eine Halterung 28 auf, welche mittels einer Montageplatte 29 mit dem beweglichen Teil 11 verbunden ist. An der Halterung 28 sind zwei um jeweils ein Gelenk 32, 33 schwenkbare Führungen 30, 31 vorgesehen, die als Gleitführungen ausgestaltet sind. Jede Führung 30, 31 fasst eine innere Stange 15, 16 und ist an der Stange 15, 16 entlangbewegbar. Diese Ausführungsform ist für große Schweißkräfte geeignet.
- 1: Folienschlauch
- 2, 3: Schweißbacke
- 4, 5: Backenhalter
- 6, 7: Backenträger
- 8: Linearantrieb
- 9: Wirklinie
- 10: ortsfestes Teil
- 11: bewegliches Teil
- 12: Getriebe
- 13, 14: Gelenk
- 15, 16, 17, 18: Stange
- 19: ortsfestes Gelenk
- 20, 21: Gelenk
- 22: Verbindungsglied
- 23, 24: Stange
- 25, 26, 27: Gelenkstelle
- 28: Halterung
- 29: Montageplatte
- 30,31: Führung
- 32, 33: Gelenk
- 34: Steuereinrichtung
- 35: Führung
- 36: starre Verbindung
- 37: Aussparung

## Patentansprüche

1. Vorrichtung zum Verschweißen eines Folienschlauches (1), mit zwei gegeneinander bewegbaren, den Folienschlauch (1) zwischen sich einklemmenden Schweißbacken (2, 3), zwei Backenhaltem (4, 5) zum Halten jeweils einer Schweißbacke (2, 3), jeweils einen Backenträger (6, 7) zum Tragen der Backenhalter (4, 5) und damit der Schweißbacken (2, 3), einem Linearantrieb (8) mit einem entlang einer Wirklinie (9) und eines ortsfesten Teils (10) linear beweglichen Teil (11), einem mit dem beweglichen Teil (11) verbundenen Getriebe (12), wobei das Getriebe (12) mit den Backenträgern (6, 7) verbunden ist, um eine gegenläufige Bewegung der Backenträger (6, 7) und damit der Schweißbacken (2, 3) zu erzeugen, und um die Schweißbacken (2, 3) aufeinander zu und voneinander weg bewegen zu können, und mit jeweils einem Gelenk (13, 14) an den Backenträgern (6, 7), um Stangen (15, 16, 17, 18) des Getriebes (12) schwenkbar mit den Backenträgern (6, 7) zu verbinden, **dadurch gekennzeichnet, dass** das Getriebe (12) vier Stangen (15, 16, 17, 18) aufweist, wovon zwei innere Stangen (15, 16) über ein ortsfestes Gelenk (19) schwenkbar befestigt sind, und zwei äußere Stangen (17, 18) über jeweils ein Gelenk (20, 21) an einer inneren Stange (15, 16) und ein weiteres Gelenk (13, 14) mit einem Backenträger (6, 7) verbunden sind, und dass das bewegliche Teil (11) über ein Verbindungsglied (22) mit den inneren Stangen (15, 16) verbunden ist, um bei einer Bewegung des beweglichen Teils (11) entlang einer Wirklinie (9) die inneren Stangen (15, 16) und damit die Backenträger (6, 7) voneinander weg oder aufeinander zu schwenken.

2. Vorrichtung nach Anspruch 1, **dadurch gekennzeichnet, dass** das ortsfeste Gelenk (19) auf einer Verlängerung der Wirklinie (9) liegt, und dass das Getriebe (12) achsensymmetrisch zur Wirklinie (9) aufgebaut ist.

3. Vorrichtung nach Anspruch 1 oder Anspruch 2, **dadurch gekennzeichnet, dass** das Verbindungsglied (22) zwei weitere Stangen (23, 24) enthält, welche einerseits über eine Gelenkstelle (25) am beweglichen Teil (11) mit dem beweglichen Teil (11) verbunden sind, und andererseits über jeweils eine weitere Gelenkstelle (26, 27) mit einer inneren Stange (15, 16) verbunden sind.

4. Vorrichtung nach Anspruch 3, **dadurch gekennzeichnet, dass** die Gelenkstellen (26, 27) weiter vom ortsfesten Gelenk (19) entfernt sind als die Gelenke (20, 21).

5. Vorrichtung nach Anspruch 1 oder Anspruch 2, **dadurch gekennzeichnet, dass** das Verbindungsglied (22) eine Halterung (28) aufweist, welche vorzugsweise mittels einer Montageplatte (29) mit dem beweglichen Teil (11) verbunden ist, dass an der Halterung (28) zwei um jeweils ein Gelenk (32, 33) schwenkbare Führungen (30, 31) vorgesehen sind, die vorzugsweise als Gleitführungen ausgestaltet sind, und dass jede Führung (30, 31) eine innere Stange (15, 16) fasst und an der Stange (15, 16) entlangbewegbar ist.

6. Vorrichtung nach einem der Ansprüche 1 bis 5, **dadurch gekennzeichnet, dass** eine Steuereinrichtung (34) vorgesehen ist, um die Bewegung des beweglichen Teils (11) zeitabhängig zu steuern.

7. Vorrichtung nach einem der Ansprüche 1 bis 6, **dadurch gekennzeichnet, dass** der Linearantrieb (8) als Linearmotor, welcher nach einem Schwebebahnprinzip funktioniert, ausgestaltet ist.

8. Vorrichtung nach einem der Ansprüche 1 bis 7, **dadurch gekennzeichnet, dass** die Backenträger (6, 7) über jeweils zwei in Führungen (35) geführten starren Verbindungen (36) mit den Backenhaltem (5, 6) verbunden sind.

## Claims

1. A device for sealing a foil tube (1), comprising two sealing jaws (2, 3) which are movable relative to one another and clamp the foil tube (1) between them, two jaw holders (4, 5) for holding a respective clamping jaw (2, 3), a respective jaw carrier (6, 7) for carrying the jaw holders (4, 5) and thus the sealing jaws (2, 3), a linear drive (8) with a part (11) which is movable in a linear manner along a line of action (9) and along a stationary part (10), a transmission (12) connected to the movable part (11), the transmission (12) being connected to the jaw carriers (6, 7) in order to produce opposing movements of the jaw carriers (6, 7) and thus the sealing jaws (2, 3) and in order to be able to move the sealing jaws (2, 3) towards and away from one another, and a respective articulation (13, 14) on the jaw carriers (6, 7) for the pivotable connection of rods (15, 16, 17, 18) of the transmission (12) to the jaw carriers (6, 7), **characterised in that** the transmission (12) has four rods (15, 16, 17, 18), of which two inner rods (15, 16) are pivotably secured by a fixed articulation (19), and two outer rods (17, 18) are connected to a jaw carrier (6, 7) via a respective articulation (20, 21) on an inner rod (15, 16) and via a further articulation (13, 14), and **in that** the movable part (11) is connected to the inner rods (15, 16) by a connecting link (22) in order to pivot the inner rods (15, 16) and thus the jaw carriers (6, 7) away from or towards one another when the movable part (11) moves along a line of action (9).

2. A device according to claim 1, **characterised in that** the fixed articulation (19) lies on an extension of the line of action (9), and **in that** the transmission (12) is constructed so as to be axially symmetrical to the line of action (9).

3. A device according to claim 1 or claim 2, **characterised in that** the connecting link (22) comprises two further rods (23, 24) which are connected at one end to the movable part (11) via an articulation point (25) on the movable part (11) and at the other end to an inner rod (15, 16) via a respective further articulation point (26, 27).

4. A device according to claim 3, **characterised in that** the articulation points (26, 27) are located further away from the fixed articulation (19) than the articulations (20, 21).

5. A device according to claim 1 or claim 2, **characterised in that** the connecting link (22) has a support (28) which is preferably connected to the movable part (11) by means of a mounting plate (29), **in that** two guides (30, 31), which are pivotable about a respective articulation (32, 33), are provided on the support (28) and are preferably constructed as sliding guides, and **in that** each guide (30, 31) holds an inner rod (15, 16) and is movable along the rod (15, 16).

6. A device according to any one of claims 1 to 5, **characterised in that** a control means (34) is provided in order to control the movement of the movable part (11) in a time-dependent manner.

7. A device according to any one of claims 1 to 6, **characterised in that** the linear drive (8) is constructed as a linear motor which operates on the principle of a suspension railway.

8. A device according to any one of claims 1 to 7, **characterised in that** the jaw carriers (6, 7) are each connected to the jaw holders (5, 6) [sic - (4, 5)] by two rigid connectors (36) guided in guides (35).

## Revendications

1. Dispositif de soudure d'un rouleau de film étirable (1) avec deux mâchoires de soudure (2, 3) déplaçables l'une vers l'autre et enserrant le rouleau de film étirable (1), deux fixations de mâchoire (4, 5) maintenant une mâchoire de soudure (2, 3) chacune, deux supports de mâchoire (6, 7) pour le maintien d'une fixation de mâchoire (4, 5), et donc de la mâchoire de soudure (2, 3) chacun, un entraînement linéaire (8) avec une pièce mobile (11) linéairement le long d'une ligne de translation (9) et d'une pièce fixe (10), un engrenage (12) relié à la pièce mobile (11), ledit engrenage (12) étant relié aux supports de mâchoire (6, 7) pour générer le déplacement l'un vers l'autre des supports de mâchoire (6, 7) et donc des mâchoires de soudure (2, 3), et pour pouvoir déplacer les mâchoires de soudure (2, 3) l'une vers l'autre et l'une à l'écart de l'autre, et avec une articulation (13, 14) sur chaque support de mâchoire (6, 7) pour raccorder aux supports de mâchoire (6, 7) des tringles (15, 16, 17, 18) de l'engrenage (12) de manière que celles-ci puissent pivoter, **caractérisé en ce que** l'engrenage (12) comporte quatre tringles (15, 16, 17, 18), parmi lesquelles deux tringles intérieures (15, 16) sont fixées par une articulation fixe (19) de manière à pouvoir pivoter, et deux tringles extérieures (17, 18) sont reliées chacune à un support de mâchoire (6, 7) par une articulation (20, 21) sur une tringle intérieure (15, 16) et par une autre articulation (14, 15), et **en ce que** la pièce mobile (11) est reliée par un élément de raccord (22) aux tringles intérieures (15, 16) pour faire pivoter l'une à l'écart de l'autre, ou l'une vers l'autre, les tringles intérieures (15, 16) et avec elles les supports de mâchoire (6, 7), en cas de déplacement de la pièce mobile (11) le long d'une ligne de translation (9).

2. Dispositif selon la revendication 1, **caractérisé en ce que** l'articulation fixe (19) est située sur une prolongation de la ligne de translation (9), et **en ce que** l'engrenage (12) est monté en symétrie axiale par rapport à la ligne de translation (9).

3. Dispositif selon la revendication 1 ou 2, **caractérisé en ce que** l'élément de raccord (22) comprend deux autres tringles (23, 24), lesquelles sont d'une part reliées à la pièce mobile (11) par un point d'articulation (25) sur la pièce mobile (11), et d'autre part reliées chacune à une tringle intérieure (15, 16) par un autre point d'articulation (26, 27).

4. Dispositif selon la revendication 3, **caractérisé en ce que** les points d'articulation (26, 27) sont plus éloignés de l'articulation fixe (19) que les articulations (20, 21).

5. Dispositif selon la revendication 1 ou 2, **caractérisé en ce que** l'élément de raccord (22) comporte un support (28), lequel est préférentiellement relié à la pièce mobile (11) au moyen d'une plaque de montage (29), **en ce que** deux guidages (30, 31) sont prévus sur le support (28), pivotant chacun autour d'une articulation (32, 33) et préférentiellement conformés comme glissières, et **en ce que** chaque guidage (30, 31) enserre une tringle intérieure (15, 16) et est déplaçable le long de la tringle (15, 16).

6. Dispositif selon l'une des revendications 1 à 5, **caractérisé en ce qu'**un dispositif de commande (34) est prévu pour commander le déplacement de la pièce mobile (11) en fonction du temps.

7. Dispositif selon l'une des revendications 1 à 6, **caractérisé en ce que** l'entraînement linéaire (8) est conformé comme moteur linéaire fonctionnant suivant le principe d'un téléphérique.

8. Dispositif selon l'une des revendications 1 à 7, **caractérisé en ce que** les supports de mâchoire (6, 7) sont reliés aux fixations de mâchoire (4, 5) par deux raccords (36) rigides chacun, passés dans des guidages (35).
